(19) **Europäisches Patentamt / European Patent Office / Office européen des brevets**

(11) **EP 4 625 551 A1**

(12) **EUROPEAN PATENT APPLICATION**
published in accordance with Art. 153(4) EPC

(43) Date of publication:
01.10.2025 Bulletin 2025/40

(21) Application number: 23913040.4

(22) Date of filing: 29.12.2023

(51) International Patent Classification (IPC):
H01M 4/92 (2006.01)   H01M 4/90 (2006.01)
C01B 32/15 (2017.01)

(52) Cooperative Patent Classification (CPC):
C01B 32/15; H01M 4/90; H01M 4/92; H01M 8/10;
Y02E 60/50

(86) International application number:
PCT/KR2023/022035

(87) International publication number:
WO 2024/144366 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022 KR 20220189114

(71) Applicant: The Carbon Studio Inc.
Daejeon 34015 (KR)

(72) Inventors:
• PARK, Jae-Hyun
Daegu 42093 (KR)
• BAE, Young-Kyu
Daejeon 34809 (KR)
• LEE, Gil-Hwan
Daejeon 34010 (KR)

(74) Representative: Schmidt, Steffen J.
Wuesthoff & Wuesthoff
Patentanwälte und Rechtsanwalt PartG mbB
Schweigerstrasse 2
81541 München (DE)

(54) **POROUS CARBON SUPPORT AND CATALYST FOR FUEL CELL**

(57) The present invention relates to a porous carbon body, and more specifically, to a porous carbon body satisfying the following three physical properties: a surface area physical property of pores having a size of 2 nm to 5 nm; a surface area physical property of pores having a size of 2 nm to 100 nm; and a physical property relating to a delta graph which is a graph of the values of a nitrogen desorption isotherm minus the values of a nitrogen adsorption isotherm in a nitrogen adsorption-desorption isotherm according to relative pressure..

[FIG. 1]

# EP 4 625 551 A1

**Description**

Technical Field

The present disclosure relates to a porous carbon support and a catalyst for a fuel cell using the same.
The national research and development projects that supported the present disclosure are as follows.

Project ID 1711182201
Project No. 2021M3H4A1A02049886
Ministry of Science and ICT
Project Management (Specialized) Organization Name National Research Foundation of Korea
Research Project Name: Nanomaterial Technology Development / Seon Do Hyung
Research Project Name: Development of High-crystalline porous carbon carrier synthesis technology Based on Low-temperature process
Contribution rate 0.5
Project execution organization name: The Carbon Studio Co., Ltd.
Research period: 2023-01-01 ~ 2023-12-31
Project ID 1415186363
Project No. 20020437
Ministry of Trade, Industry and Energy
Project Management (Specialized) Agency Name Korea Institute of Industrial Technology Planning and Evaluation
Research Project Name: Nano-Fusion Innovation Product Technology Development
Research Project Name: Development of Hydrogen electric vehicle fuel cell module technology Based on Production of Platinum Alloy Nano-Catalyst having MEA Platinum Usage 0.2gkW or Less
Contribution rate 0.5
Project execution organization name: The Carbon Studio Co., Ltd.
Research period: 2023-01-01 ~ 2023-12-31

Background Art

A Polymer Electrolyte Membrane Fuel Cell (PEMFC) is attracting attention as an energy source that can replace fossil fuels, since the PEMFC has high energy efficiency and is environmentally friendly.
A PEMFC is a power generation system which produces electricity through an electrochemical reaction of hydrogen and oxygen using a catalyst, and has a structure in which unit cells including a membrane electrode assembly (MEA) and a bipolar plate are stacked. A MEA has a structure in which a cation exchange membrane (also called a polymer electrolyte membrane) is inserted into an anode and a cathode.
An important factor determining the performance of a fuel cell is a catalyst used to form the electrodes (anodes, cathodes) of the MEA, which is generally used by supporting platinum-based catalyst particles on a porous carbon support.
A porous carbon support not only supports catalyst particles, but also affects catalytic performance. For example, an amount of catalyst particles supported thereon is determined by a specific surface area of the carbon support, and the stability and durability of the entire fuel cell are affected by a degree of deterioration of the carbon support. Above all, a structure of pores of the carbon support has a great influence on a degree of dispersion of the catalyst particles supported, a size of the catalyst particles, a position of the catalyst particles within the support, gas diffusivity, a degree of flooding, and the power generation performance depending on the fuel cell operating conditions (e.g., high temperature and low humidity conditions), and therefore, various studies are being conducted to control the size and structure of pores of the carbon support.
However, there are still various interpretations, including conflicting interpretations, regarding an advantageous structure of pores of the porous carbon support, and the advantageous structure of pores has not yet been established.

Summary of Invention

Technical Problem

An aspect of the present disclosure is to provide a porous carbon body that can exhibit improved mass activity when used as a fuel cell catalyst support.
An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

According to an aspect of the present disclosure, a porous carbon body satisfies the following properties:

Property 1: a surface area of pores having a size of 2 nm or more to 5 nm or less obtained by an $N_2$ desorption isotherm based on a Barrett-Joyner-Halenda (BJH) method based on a Harkins-Jura equation is 100 $m^2$/g to 500 $m^2$/g,
Property 2: a surface area of pores having a size of 2 nm or more to 100 nm or less obtained by an $N_2$ desorption isotherm based on a BJH method based on a Harkins-Jura equation is 200 $m^2$/g to 1500 $m^2$/g,
Property 3: an $N_2$ adsorption-desorption isotherm has hysteresis, and a delta graph, a graph of a value obtained by subtracting a value of the nitrogen adsorption isotherm from a value of the nitrogen desorption isotherm according to relative pressure in a range of relative pressure of 0.3 to 1.0, has at least a first maximum point and a second maximum point, wherein a value of the first maximum point located at a lower relative pressure < a value of the second maximum point located at a higher relative pressure.

In a specific example, a maximum point ratio obtained by dividing the value of the first maximum point by the value of the second maximum point may be 0.10 to 0.95.
In a specific example, the first maximum point may be located in a range of relative pressure (P/P$_0$) of 0.4 or more to less than 0.9, and the second maximum point may be located in a range of relative pressure (P/P$_0$) of 0.9 or more to less than 1.0.
In a specific example, the first maximum point may be located in a range of relative pressure (P/P$_0$) of 0.45 to 0.80, and the second maximum point may be located in a range of relative pressure (P/P$_0$) of 0.93 to 0.98.
In a specific example, in the nitrogen adsorption/desorption isotherm, an area ratio of a hysteresis area in the range of relative pressure (P/P$_0$) of 0.9 to 1.0 divided by a hysteresis area in the range of relative pressure (P/P$_0$) of 0.4 to 0.9 may be 0.1 to 2.0.
In a specific example, the area ratio may be 0.1 to 1.5.
In a specific example, the porous carbon body may further satisfy the following property 4:
Property 4: an average interlayer spacing (d$_{002}$) measured by X-ray diffraction is 0.335 nm to 0.350 nm.
In a specific example, the porous carbon body may further satisfy the following property 5:
Property 5: an a-axis lattice constant (L$_a$) measured by X-ray diffraction is 4 nm to 12 nm.
In a specific example, the relative pressure (P/P0) at a point at which the hysteresis closes may be 0.45 or less.
In a specific example, in the delta graph, a value of a minimum point located between the first maximum point and the second maximum point may be 15 to 90% of the value of the first maximum point.
In a specific example, the porous carbon body may be a porous carbon body doped with a heterogeneous element.
A catalyst for a fuel cell according to the disclosure includes the above-described porous carbon body and a catalyst material supported on the above-described porous carbon body.
A catalyst layer for a fuel cell according to the disclosure contains the above-described catalyst and ionomer.
The present disclosure includes a polymer electrolyte membrane fuel cell including the above-described catalyst. Advantageous Effects of Invention
According to the present disclosure, a porous carbon body has a unique pore structure and can exhibit improved mass activity when used as a fuel cell catalyst support.
According to a specific example, due to a unique pore structure, a porous carbon body enables enhanced mass transport of both reactants and products of a fuel cell, and further enables enhanced transport of hydrogen ions, so that the porous carbon body can exhibit improved mass activity when used as a fuel cell catalyst support.
According to another specific example, a porous carbon body has improved mass activity due to the unique pore structure and high crystallinity, and thus can exhibit improved durability when used as a fuel cell catalyst support.
The various advantageous and beneficial advantages and effects of the present disclosure are not limited to the above-described contents, and will be more easily understood in the course of explaining specific embodiments of the present disclosure.

Brief Description of Drawings

FIG. 1 is a diagram illustrating a delta graph of a porous carbon body prepared according to an embodiment.
FIGS. 2 and 3 are diagrams illustrating delta graphs of comparison samples.

Mode for Invention

The terms used in this specification are used to describe the present disclosure and are not intended to limit the present disclosure. In addition, as used herein, singular forms include plural forms unless the relevant definition clearly indicates the contrary.

The meaning of 'including' used in the specification specifies a configuration and does not exclude the presence or addition of another configuration.

Unless otherwise defined, all terms, including technical terms and scientific terms used in this specification, have the same meaning as that which could be commonly understood by those skilled in the art in the technical field to which the present disclosure pertains. Terms defined in the dictionary are interpreted as having meanings consistent with related technical literature and current disclosure.

In the present specification and the appended claims, the terms first, second, etc. are not used in a limiting sense but are used to distinguish one component from another component.

In the present specification and the appended claims, a fuel cell may include a polymer electrolyte membrane fuel cell (PEMFC), a phosphate fuel cell (PAFC), an alkaline fuel cell (AFC), a molten carbonate fuel cell (MCFC), or a solid oxide fuel cell (SOFC). However, since the porous carbon body according to a specific example may exhibit improved mass activity when supporting a catalyst material, it may be more effectively utilized in a fuel cell in which an expensive catalyst material is commonly used. Examples of such fuel cells may include a polymer electrolyte membrane fuel cell (PEMFC), a phosphate fuel cell (PAFC), and the like.

In the present specification and the appended patent claims, the pore size classification is based on the definition of the International Union of Pure and Applied Chemistry (IUPAC). Specifically, according to the IUPAC definition, micropores refer to pores having a diameter of 2 nm or less, mesopores refer to pores having a diameter of 2 nm to 50 nm, and macropores refer to pores having a diameter of 50 nm or more.

In the present specification and the appended claims, a nitrogen adsorption/desorption isotherm refers to an isotherm obtained by combining an isotherm of a nitrogen adsorption process (nitrogen adsorption isotherm) obtained by measuring nitrogen adsorption of a porous carbon body and an isotherm of a nitrogen desorption process (nitrogen desorption isotherm). When described in detail with a graph of an X-axis of the relative pressure of nitrogen ($P/P_0$) and a Y-axis of the nitrogen adsorption amount ($cm^3/g$ STP), the nitrogen adsorption/desorption isotherm has the same X-axis and the same Y-axis, and refers to a graph in which the nitrogen adsorption isotherm and the nitrogen desorption isotherm are plotted together. Hysteresis may refer to a form in which the nitrogen adsorption isotherm and nitrogen desorption isotherm are separated from each other in the nitrogen adsorption-desorption isotherm. In other words, hysteresis may refer to a certain range in which the nitrogen adsorption amount appears differently at the same relative pressure due to a difference in the nitrogen adsorption process and the nitrogen desorption process.

The present inventors have conducted research on a porous carbon body for a fuel cell catalyst support that satisfies both high porosity and high crystallinity, which are known as a trade-off relationship. In the process of continuously performing this research, it was found that a relatively coarse pore structure including mesopores and macropores of a porous carbon body for a fuel cell catalyst support greatly affects the mass activity of the fuel cell catalyst material. As a result of in-depth research based on these findings, a pore structure of the porous carbon body that can significantly improve the mass activity of a catalyst material was established, thereby completing the present disclosure.

Based on the above-described findings, the porous carbon body according to the disclosure satisfies the following properties 1, 2 and 3:

Property 1: a surface area of pores having a size of 2 nm or more to 5 nm or less obtained by an $N_2$ desorption isotherm based on a Barrett-Joyner-Halenda (BJH) method based on a Harkins-Jura equation is 100 $m^2/g$ to 500 $m^2/g$,

Property 2: a surface area of pores having a size of 2 nm or more to 100 nm or less obtained by an $N_2$ desorption isotherm based on a Barrett-Joyner-Halenda (BJH) method based on a Harkins-Jura equation is 200 $m^2/g$ to 1500 $m^2/g$,

Property 3: an $N_2$ adsorption-desorption isotherm has hysteresis, and a delta graph, a graph of a value obtained by subtracting a value of the nitrogen adsorption isotherm from a value of the nitrogen desorption isotherm according to relative pressure in a range of relative pressure of 0.3 to 1.0, has at least a first maximum point and a second maximum point, and a value of the first maximum point located at a lower relative pressure < a value of the second maximum point located at a higher relative pressure.

A pore region having a size of 2 nm or more to 5 nm or less is a region which mainly affects the support of a catalyst material, and the characteristics of the catalyst material supported on a porous carbon body may be determined by a specific surface area of the pore region having a size of 2 to 5 nm.

Since the porous carbon body satisfies property 1, the catalyst material may be supported on the porous carbon body in the form of ultrafine particles of several nanometers (for example, 1 to 3 nm), and the aggregation of the catalyst material may be suppressed, thereby improving the stability and durability of the catalyst.

According to a specific example, the porous carbon body may satisfy a surface area of pores having a size of 2 nm or more to 5 nm or less obtained by the $N_2$ desorption isotherm based on the Barrett-Joyner-Halenda (BJH) method based on the Harkins-Jura equation of 100 $m^2$/g to 500 $m^2$/g, specifically 100 $m^2$/g to 400 $m^2$/g, and more specifically 100 $m^2$/g to 350 $m^2$/g.

The pore region having a size of 2 nm to 100 nm is a region involved in the transport of reaction products of a fuel cell, such as water, and various characteristics of the fuel cell may be affected by the specific surface area of the pore region having a size of 2 nm to 100 nm. Since the porous carbon body satisfies property 2, the reaction products of the fuel cell may be efficiently transported during fuel cell operation.

According to a specific example, the porous carbon body may satisfy a surface area of pores having a size of 2 nm or more to 5 nm or less obtained by the $N_2$ desorption isotherm based on the Barrett-Joyner-Halenda (BJH) method based on the Harkins-Jura equation of 200 $m^2$/g to 1500 $m^2$/g, specifically 200 $m^2$/g to 1000 $m^2$/g, more specifically 200 $m^2$/g to 800 $m^2$/g, and even more specifically 200 $m^2$/g to 700 $m^2$/g.

According to a specific example, the porous carbon body may satisfy the properties 1 and 2 described above, and at the same time, satisfy the following property 3.

Property 3: an $N_2$ adsorption-desorption isotherm has hysteresis, and a delta graph, a graph of a value obtained by subtracting a value of the nitrogen adsorption isotherm from a value of the nitrogen desorption isotherm according to relative pressure in a range of relative pressure ($P/P_0$) of 0.3 to 1.0, has at least a first maximum point and a second maximum point, and a value of the first maximum point located at a lower relative pressure < a value of the second maximum point located at a higher relative pressure.

As is known, the $N_2$ adsorption/desorption isotherm represents a relationship between a nitrogen partial pressure and a nitrogen adsorption amount, and has a value of the adsorption amount ($cm^3$/g STP) according to the relative pressure ($P/P_0$). The delta graph is a graph of the value (delta value) obtained by subtracting the adsorption amount value of the nitrogen adsorption isotherm from the adsorption amount value of the nitrogen desorption isotherm according to the relative pressure. Accordingly, the delta graph is a graph having relative pressure ($P/P_0$) as an X-axis and a difference in the adsorption amount (delta value) in a unit of $cm^3$/g STP as a Y-axis, similar to the nitrogen adsorption-desorption isotherm.

In a delta graph, the maximum point may correspond to a boundary point between an increasing region, where the delta value increases as the relative pressure increases, and a decreasing region, where the delta value decreases as the relative pressure increases. In this case, the increasing region and the decreasing region are of course continuous regions based on the boundary point.

Property 3 is a property related to a coarse pore structure including mesopores and macropores in a porous carbon body. In Property 3, the delta graph has at least two maximum points, which may mean that the porous carbon body has a pore structure in which at least two coarse pore groups with different size categories are developed. At the same time, the property that the value of the second maximum point located at a relatively high relative pressure is larger than that of the first maximum point located at a relatively low relative pressure may mean that the porous carbon body has a more developed pore structure in which the coarse pore group having a relatively larger size range among the two well-developed coarse pore groups is more developed.

Since the porous carbon body satisfies property 3, gaseous reactants such as oxygen may be efficiently supplied into the porous carbon body, and at the same time, the performance of the fuel cell may be prevented from deteriorating due to a flooding phenomenon in which the pores are blocked by reaction products such as water.

As described above, the delta graph may have a first increasing region and a first decreasing region having a boundary point of a first maximum point, and a second increasing region and a second decreasing region having boundary points of a second maximum point.

In a delta graph, the first increasing region, the first decreasing region, the second increasing region, and the second decreasing region are sequentially located in a direction in which relative pressure increases, and may be located consecutively with each other. 'Located consecutively with each other' means that there is no intersection between the delta graph and the X-axis, except for an end point of the delta graph, which are located at the relative pressure where the hysteresis closes.

Except for the endpoint of the delta graph, the fact that the delta graph does not contact the X-axis means that at least two groups of coarse pores having different size categories developed in the porous carbon body are connected to each other (are connected to each other for communication therewith).

In detail, a value of a minimum point corresponding to a boundary point between the first decreasing region and the second increasing region, or in other words, a value of a minimum point located between the first maximum point and the second maximum point, may be a positive real number, and specifically, the value may be 15 to 90% of the first maximum value, more specifically, 20 to 85% of the first maximum value. A porous carbon body having the value of the minimum point described above on a delta graph may have a pore structure in which two groups of coarse pores are well connected to each other for communication therewith by other pores, so that the transport of substances including reactants and reaction products may occur more easily and actively. Accordingly, when the porous carbon body having the above-described minimum point is used as a fuel cell catalyst support, the fuel cell characteristics may be stably maintained in a wide humidity range from low humidity to high humidity.

In a specific embodiment, relative pressure ($P/P_0$) at a point at which hysteresis of a nitrogen adsorption/desorption isotherm closes may be 0.45 or less, specifically 0.40 to 0.45, and more specifically 0.40 to 0.43. Hysteresis which closes at relative pressure of around 0.4 indicates that the pores of the porous carbon body contain a certain amount of pores of a bottleneck structure.

In a specific example, the porous carbon body may have a delta graph of which a first maximum point is located in a range (region) of relative pressure ($P/P_0$) of 0.4 or more to less than 0.9, and a second maximum point is located in a range (region) of relative pressure ($P/P_0$) of 0.9 or more to less than 1.0.

When at least two well-developed coarse pore groups are referred to as a first coarse pore group (pores contributing to forming a first maximum point) and a second coarse pore group (pores contributing to forming a second maximum point), a position of each maximum point may indicate size ranges of the pores contributing to each coarse pore group.

The fact that the first maximum point is located in a range (region) of relative pressure ($P/P_0$) of 0.4 or more to less than 0.9, specifically, in a range (region) of 0.45 to 0.80, means that a first coarse pore group is formed by pores having a size which is somewhat larger than that of a particulate catalyst supported on the porous carbon body. By the first coarse pore group, enhanced and rapid supply of a gaseous phase to the particulate catalyst and enhanced and rapid discharge of a liquid phase derived from the particulate catalyst may be performed, and flooding may be effectively prevented. High mass activity may be secured in a high current region by enhanced material transfer between the gaseous and liquid phases.

A specific example of the gaseous phase may be a gas involved in an electrochemical reaction of a fuel cell, such as oxygen, air or hydrogen, and a specific example of the liquid phase may be a liquid including a reaction product of the electrochemical reaction of a fuel cell, such as water. However, the present disclosure is not limited to the specific substances of the gaseous phase and the liquid phase.

The fact that the second maximum point is located in the range (region) of relative pressure of 0.9 or more to less than 1.0, specifically in the range (region) of relative pressure of 0.93 to 0.98, means that a second coarse pore group is formed by coarse pores having a size of 100 nm or more. Strong bonding between an ion transfer mediator such as ionomer and a porous carbon body may be performed by the second coarse pore group, and at least a portion of the ion transfer mediator may be easily introduced into the interior of the porous carbon body, and enhanced ion transport to the particulate catalyst may be performed. Strong bonding with the ion transfer mediator and enhanced ion transfer properties enable high mass activity in low and medium current ranges.

A specific example of ions may be hydrogen ions involved in the electrochemical reaction of the fuel cell, but the present disclosure is not limited to the type of specific ions.

As described above, since the porous carbon body has a pore structure having a first maximum point located in a range of 0.4 to 0.9, specifically 0.45 to 0.80 on the delta graph, and a second maximum point located in a range of 0.9 to 1.0, specifically 0.93 to 0.98, enhanced transport of gas phases, liquid phases, and ions may be performed, so that when used as a catalyst support for a fuel cell, improved mass activity may be secured in a wide current range including low current, medium current, and high current regions.

Furthermore, by the minimum point having the size described above, since a first coarse pore group formed by pores having a larger size than that of the particulate catalyst and a second coarse pore group formed by coarse pores having a size of 100 nm or more are well connected to each other for communication therewith, in the porous carbon body, the three phases of gas, liquid and ions may move more efficiently and quickly inside and outside of the porous carbon body.

In a specific example, a maximum point ratio (M1/M2) obtained by dividing a value of a first maximum point (M1) by a value of a second maximum point (M2) on the delta graph may be 0.10 to 0.95, specifically 0.15 to 0.90. Since the porous carbon body has a pore structure satisfying the maximum point ratio described above, the gaseous phase and ions may be supplied homogeneously and efficiently to the particulate catalyst material located in the pore region having a pore size of 2 to 5 nm within the porous carbon body. In addition, when the maximum point ratio described above is satisfied together with the properties 1, 2, and 3, the above-described gaseous phase and ion supply may be maximized.

In a specific example, in a nitrogen adsorption/desorption isotherm of the porous carbon body, an area ratio (HA2/HA1) obtained by dividing an area of hysteresis(HA2) in a region of relative pressure (P/P0) of 0.9 to 1.0 by an area of hysteresis (HA1) in a region of relative pressure (P/P0) of 0.4 to 0.9 may be 0.1 to 2.0, specifically 0.1 to 1.5, and more specifically 0.10 to 1.3.

The area of hysteresis (HA1) located in the range of relative pressure of 0.4 to 0.9 may indicate a degree of development of pores contributing to the first coarse pore group described above, and the area of hysteresis(HA2) located in the range of relative pressure of 0.9 to 1.0 can indicate a degree of development of pores contributing to the second coarse pore group.

The area ratio (HA2/HA1) described above may indicate that the first pore group is formed by pores having a wide size range and that the pores having a wide size range are evenly and well developed.

The pore structure satisfying the area ratio described above, together with the first, second, and third properties can particularly enable enhanced and rapid liquid transport within the porous carbon body and liquid discharge from the inside to the outside.

In a specific example, the porous carbon body may be an aggregate in which primary particles are randomly aggregated together, and the primary particles may include hollow particles. Accordingly, the pore structure of the porous carbon body described above may be formed by pores of the primary particles themselves, between the primary particles, between a portion of the aggregates and the primary particles, between a portion of the aggregates and a portion of the aggregates, and between the aggregates.

An average primary particle size of the porous carbon body may be 10 nm to 30 nm. In this case, the average primary particle size may be measured according to ASTM D3849. $D_{50}$ of the porous carbon body may be 0.5 μm to 2.0 μm. In this case, the $D_{50}$ may mean a size corresponding to 50% of a mass cumulative particle size distribution of the porous carbon body. The $D_{50}$ of the porous carbon body may be obtained by measuring the particle size distribution using a laser diffraction particle size distribution measuring device after ultrasonicating the dispersion liquid in which the porous carbon body is dispersed in a dispersion medium for 30 minutes.

In a specific example, the porous carbon body may further satisfy the following property 4.

Property 4: an average interlayer spacing ($d_{002}$) measured by X-ray diffraction is 0.335 nm to 0.350 nm.

The average interlayer spacing ($d_{002}$) of a (002) plane is an indicator which directly indicates the crystallinity of carbon forming a porous carbon body. $D_{002}$ of 0.335 nm to 0.350 nm may mean that a highly controlled and well-developed coarse pore structure satisfying property 1, property 2 and property 3 is formed by a carbon skeleton having excellent crystallinity.

Due to the excellent crystallinity of the carbon skeleton, the porous carbon body may have better oxidation resistance. Therefore, when the porous carbon body is used as a fuel cell catalyst support, the catalyst may have improved durability.

Together therewith, or independently thereof, the porous carbon body may further satisfy the following property 5.

Property 5: an a-axis lattice constant ($L_a$) measured by X-ray diffraction is 4 nm to 12 nm, specifically 6 nm to 12 nm, more specifically 7 nm to 12 nm, and even more specifically 7.5 nm to 12 nm.

Property 5 is also related to the crystallinity of the porous carbon body, and a larger La value indicates that the carbon skeleton of the porous carbon body is formed of graphite having a wider hexagonal network. Since the porous carbon body satisfies Property 5, it is advantageous in that it can reduce a defect site vulnerable to oxidation.

Together therewith, or independently thereof, the porous carbon body can further satisfy the following property 6.

Property 6: an average number of graphene layers calculated by X-ray diffraction method is 6 to 20, specifically 7 to 15, more specifically 8 to 15.

Property 6 is also related to the crystallinity of the porous carbon body, and an average number of graphite layers is a value calculated by adding 1 to a value obtained by dividing a c-axis lattice constant ($L_c$) by $d_{002}$, which indicates that the larger the average number of graphite layers, the more the carbon skeleton of the porous carbon body is formed as a thicker graphite crystal.

In an advantageous example, the porous carbon body may have excellent crystallinity satisfying all of properties 4, 5 and 6, together with the above-described pore structure. When the porous carbon support has the above-described pore structure and crystallinity satisfying all of the properties 4, 5, and 6, a porous carbon support may have excellent oxidation resistance in which a mass reduction rate at a temperature within a range of 500°C to 700°C in a thermogravimetric analysis (TGA) is at a level of 0% to 30%, specifically, at the level of 2 to 28%, or 10 to 28%, or 15 to 25%, or 18 to 20%, or 21 to 23%.

In addition, when the porous carbon body has the above-described pore structure and crystallinity satisfying all of the properties 4, 5, and 6, the porous carbon support may exhibit oxidation resistance at a high temperature within a range of 700°C to 740°C, specifically, a high temperature of 705°C to 730°C, or 710°C to 715°C, or 715°C to 725°C, at which a mass of 30% based on the raw material is reduced in a thermogravimetric analysis. Experimentally, the thermogravimetric analysis of porous carbon materials may be measured via ASTM E1131.

In a specific embodiment, the porous carbon body may be doped with a heterogeneous element. The heterogeneous element may include one or more elements selected from a metalloid, a non-metal (excluding carbon), and a transition metal. The metalloid may include one or more elements selected from B, Si, Ge, As, Sb, Te, and Po, and the non-metal may include one or more elements selected from N, O, P, S, and Se. The transition metal may include at least one element selected from metals belonging to groups 3 to 12, specifically metals belonging to 4 to 5 periods of groups 3 to 12 (e.g., Co, Fe, Ni, Cu, Zn, Cr, V, Ti, Sc, Y, Zr, Nb, Mo, Tc, Ru, Rh, Pd, Ag, Cd) and metals belonging to a lanthanide group (La, Ce, Pr, Nd, Pm, Sm, Eu, Gd, Tb, Dy, Ho, Er, Tm, Yb, Lu). When the porous carbon body is doped with a heterogeneous element, the porous carbon body may contain 0.05 to 5.00 mass% of the heterogeneous element. In detail, the porous carbon body may contain 0.05 to 5.00 mass % of a metalloid, 0.05 to 0.50 mass % of a non-metal, and/or 0.05 to 2.00 mass % of a transition metal. When used as a fuel cell catalyst support, the catalytic activity may be improved by doping with a heterogeneous element.

The present disclosure includes a catalyst for a fuel cell including the above-described porous carbon body.

The catalyst for a fuel cell according to the disclosure includes a support, the porous carbon body described above; and a catalyst material supported on the support.

The catalyst material may include a platinum-based catalyst, a non-platinum-based catalyst, or a mixture thereof, which is known to catalyze an oxidation reaction (e.g., oxidation of hydrogen) or a reduction reaction (e.g., reduction of oxygen) that occurs in a fuel cell. Representative examples of the platinum-based catalyst may include a platinum catalyst, an alloy catalyst between platinum-noble metals (Au, Ag, Pd, Ru, Rh, Ir, Os, etc.), an alloy catalyst between platinum - non-noble metals (Ni, Fe, Co, Cr, Cu, Mn, V, Ti, Ta, Nb, Mg, Sn, Bi, Pb, Al, Mo, Nb, Ta, Zr, Ru, Se, etc.), an alloy catalyst between platinum-noble metals - non-noble metals, a composite catalyst between a platinum-based metal and a metal oxide, a core-shell catalyst of a transition metal core-platinum shell, and the like. Representative examples of the non-platinum-based catalyst may include a non-platinum-based alloy catalyst such as an Ru-Ir alloy or a Pd-transition metal alloy, a transition metal (Ni, Fe, etc.)-N-based catalyst, a transition metal (Ni, Fe, etc.)-N-C-based catalyst, and the like. However, the porous carbon body described above is more advantageous for supporting a platinum-based catalyst since it provides a more effective pore structure for supporting a catalyst material having a size of clusters or several nanometers.

The catalyst material supported on the porous carbon body may be in the form of nanoparticles, and as a specific example, may be in the form of particles having a size of 0.5 nm to 4 nm.

The catalyst may contain 5 to 70 wt%, specifically 10 to 60 wt%, of a catalyst material, but the present disclosure is not limited by an amount of the catalyst material supported.

The present disclosure includes a catalyst layer for a fuel cell containing the above-described porous carbon body.

A catalyst layer for a fuel cell according to the disclosure may include the porous carbon body described above, a catalyst material supported on the porous carbon body, and ionomer.

The present disclosure includes a catalyst layer for a fuel cell containing the catalyst described above.

A catalyst layer for a fuel cell according to the disclosure may include the above-described catalyst and ionomer.

The ionomer may be any polymeric material known to conduct ions involved in a fuel cell reaction. As a specific example, the ionomer may be a hydrogen ion-conducting ionomer. Examples of hydrogen ion-conducting ionomers may include known sulfonated block copolymers, perfluorinated polymers having sulfonate groups on the side chain, or sulfonated aromatic polymers. Ionomers may be commercial products, such as Nafion® (manufactured by DuPont), Aciplex® (manufactured by Asahi Kasei Co., Ltd.), and Plemion® (manufactured by Asahi Glass Co., Ltd.).

A content of the catalyst described above in the catalyst layer may be any amount that allows the desired catalytic performance to be stably implemented during an electrochemical reaction of the fuel cell, and the amount of catalyst commonly contained in the fuel cell catalyst layer is sufficient. As a practical example, the catalyst layer may contain 10 to 90 wt%, specifically 30 to 90 wt%, of the above-described catalyst, but the present disclosure is not limited by the specific catalyst content in the catalyst layer.

If necessary, the catalyst layer may further include a carbon material together with the above-described catalyst and ionomer. The carbon material may include the above-described porous carbon body without a catalyst material introduced, a particulate conductive carbon material, a carbon material having one-dimensional nanostructures (e.g., carbon nanotubes or carbon fibers), a carbon material having two-dimensional nanostructures (e.g., graphene, reduced graphene oxide, graphene oxide, etc.), or a mixture thereof.

The present disclosure includes a membrane-electrode assembly including the catalyst layer described above.

A membrane-electrode assembly according to the present disclosure may include an anode, a cathode, and an electrolyte membrane interposed between the anode and the cathode. The anode may include a first gas diffusion layer and a first catalyst layer, and the cathode may include a second gas diffusion layer and a second catalyst layer. In this case, the first catalyst layer of the anode and the second catalyst layer of the cathode may be disposed to be in contact with the electrolyte membrane.

At least one of the first catalyst layer and the second catalyst layer may contain the porous carbon body described above or the catalyst described above. In practice, at least one of the first catalyst layer and the second catalyst layer may be the catalyst layer for a fuel cell described above.

If necessary, a microporous layer for improved water repellent properties may be further provided between the gas diffusion layer and the catalyst layer in the anode or cathode, but the present disclosure is not limited to a spherical structure of a membrane-electrode assembly.

A gas diffusion layer may be formed of any material commonly used in the field of a fuel cell. Representative examples of gas diffusion layers may include polyethylene terephthalate and carbon paper with water-repellent properties, but an embodiment thereof is not limited thereto.

An electrolyte membrane may be any known membrane commonly used in the field of a fuel cell to conduct the desired ions. As a practical example, the electrolyte membrane may be a hydrogen ion conductive electrolyte membrane, and representative examples of the hydrogen ion conductive electrolyte membrane may include a sulfonated block copolymer, a perfluorinated polymer having a sulfonate group on the side chain, or a sulfonated aromatic polymer, and representative examples of commercial products include Nafion® (manufactured by DuPont), Aciplex® (manufactured by Asahi Kasei Co., Ltd.), and Flemion® (manufactured by Asahi Glass Co., Ltd.).

The present disclosure includes a fuel cell including the above-described porous carbon body, the above-described catalyst, the above-described catalyst layer, or the above-described membrane electrode assembly.

The present disclosure includes a fuel cell stack in which a plurality of unit cells is stacked, using the above-described membrane electrode assembly as a unit cell. In this case, each unit cell to be stacked may be located between separators in which a flow path is formed.

The present disclosure includes a method for manufacturing the porous carbon body described above.

A method for manufacturing a porous carbon body according to a specific example may include: S1) an operation of heat treating a carbon raw material at a temperature within a range of 1000°C to 3000°C to remove impurities and crystallize the raw material; S2) an operation of pretreating a carbon raw material from which impurities have been removed and crystallized in an atmosphere containing at least one heterogeneous element selected from the group consisting of boron, carbon, nitrogen, oxygen, phosphorus, and sulfur to introduce an activated site doped with the heterogeneous element; S3) an operation of mixing an additive including an organic surfactant into a carbon raw material into which the activated site has been introduced, and then removing heterogeneous elements by performing a heat treatment to activate the carbon raw material; S4) an operation of washing and then drying the activated carbon raw material; S5) an operation of performing a secondary crystallization treatment on the washed and dried activated carbon raw material; S6) an operation of preheating the carbon raw material subjected to secondary crystallization in an atmosphere containing at least one second heterogeneous element selected from the group consisting of boron, carbon, nitrogen, oxygen, phosphorus, and sulfur to introduce a secondary activated site into the carbon material; S7) an operation of mixing an additive including a second organic surfactant into the carbon raw material into which the activated site has been introduced and performing a heat treatment to perform a second activation treatment; and S8) an operation of washing and then drying the raw material subjected to secondary activation.

Operations S1) to S4) may be processes for primarily aiming to develop micropores to mesopores of several nanometers or less while improving the crystallinity of a carbon raw material, and operations S5) to S8) may be processes for further developing coarse pores including mesopores and macropores to establish a desired pore structure.

In detail, after a carbon raw material is highly crystallized through operation S1), a heterogeneous element may be inserted into a carbon molecular structure through operation S2), to form an unstable site (a site with relatively high energy) within highly crystalline carbon. In the activation operation (S3), a relatively high frequency of activation reaction may be induced at an unstable site formed in the highly crystallized carbon structure, which can improve crystallinity and yield. In addition, since the unstable site acts as a site where pores are formed, an intermediate product satisfying both porosity and high crystallinity with well-developed micropores or mesopores of several nanometers or less may be manufactured.

Thereafter, by re-crystallizing the intermediate product satisfying both high porosity and high crystallinity and then forming an unstable site by inserting a heterogeneous element, mesopores and macropores may be developed during a second activation treatment, thereby producing a porous carbon body having the desired pore structure and excellent crystallinity.

In detail, operation S1) is a process of heat treating a carbon raw material to remove impurities and crystallize the carbon raw material, which allows heterogeneous elements to effectively penetrate into the carbon raw material in operation S2). Here, impurities refer to materials other than carbon existing on the surface or inside of the carbon raw material. Examples based on materials may include petroleum residues and other functional groups, and examples based on elements may include elements other than carbon (boron, carbon, nitrogen, oxygen, phosphorus, sulfur, etc.), but an embodiment thereof is not limited thereto. In operation S1), as a lattice constant of the carbon raw material increases, crystallization can occur for a portion or all of the raw material.

In a specific example, the carbon raw material may be amorphous carbon such as hard carbon such as cellulose, phenolic resin, isotropic pitch, and the like, and soft carbon such as mesophase pitch, needle coke, and the like; crystalline carbon such as artificial graphite, natural graphite, and the like; and specifically, amorphous carbon, and more specifically, soft carbon. Soft carbon is relatively anisotropic compared to hard carbon, and carbon layer planes are arranged parallel to each other, so crystallization, i.e., graphitization, can occur through heat treatment at 1000°C or higher. In some cases, a carbon raw material may include a carbon nano tube (CNT) and a carbon nano fiber (CNF).

Operation S1) may be performed at a temperature within a range of 1000°C to 3000°C for 10 minutes or more, under vacuum or in an inert gas (nitrogen, argon, neon, helium, etc.) atmosphere. These conditions are for crystallizing carbon while removing impurities other than carbon present in the carbon raw material. In detail, operation S1) may be performed at a temperature within a range of 1000°C to 2000°C, more specifically at 1000 to 1800°C, for 10 to 100 minutes, in a vacuum or inert gas atmosphere.

Operation S2) is a process of introducing a predetermined heterogeneous element into a carbon raw material from which impurities have been removed and crystallized. In this process, the carbon raw material may be selectively replaced with the heterogeneous element starting from a portion with low crystallinity therein. An introduction point of the heterogeneous element may serve as an initiation point of the reaction in a subsequent activation process, and may also act as a point where micropores are formed.

The pretreatment in operation S2) may be performed by heat treatment at a temperature within a range of 500°C to 1000°C for 30 to 100 minutes in an atmosphere including at least one heterogeneous element selected from the group consisting of boron, carbon, nitrogen, oxygen, phosphorus, and sulfur supplied at 100 to 600 sccm. By performing a pretreatment at a relatively low temperature for a shorter period of time in an atmosphere in which a large amount of heterogeneous elements are supplied, heterogeneous elements may be introduced more selectively into a low-crystallinity portion.

As a practical example, the heterogeneous element may be at least one selected from the group consisting of boron, carbon, nitrogen, oxygen, phosphorus and sulfur.

Operation S3) is a process in which the heterogeneous element inserted in the pretreatment operation acts as a reaction initiation point to form fully-fledged micropores, and by the reaction between the corresponding heterogeneous elements and additives in operation S3), a micropore structure in which mesopores with a size of micro to several nanometers are mainly developed may be formed. As the doped heterogeneous element in a portion having weak crystallinity may be removed through the activation process, the crystallinity may be improved and pores may be formed, ultimately producing an intermediate product having a highly porous structure and exhibiting high crystallinity.

A mixture of a carbon raw material into which an activated site has been introduced and an additive may include 0.1 to 10 parts by weight of an inorganic or organic surfactant, 0.1 to 10 parts by weight of an alkali metal hydroxide, and 1 to 10 parts by weight of neutral water, based on 100 parts by weight of the carbon raw material into which an activated site has been introduced. Specifically, the mixture may include 0.5 to 5 parts by weight of an organic surfactant, 0.5 to 5 parts by weight of an alkali metal hydroxide, and 1 to 8 parts by weight of neutral water, based on 100 parts by weight of a carbon raw material into which an activated site has been introduced.

The alkali metal hydroxide may be one or more selected from the group consisting of LiOH, NaOH, KOH, RbOH and CsOH, but an embodiment thereof is not limited thereto. The organic surfactant may be at least one of SDBS, SDS, LDS, CTAB, DTAB, PVP, Triton X-series, Brij-series, Tween-series, poly(acrylic acid), and polyvinyl alcohol, but an embodiment thereof is not limited thereto.

A heat treatment in operation S3) may be performed at a temperature within a range of 500 to 1000°C for 10 to 100 minutes in an inert gas atmosphere. Specifically, the heat treatment may be performed at a temperature within a range of 600 to 900°C for 10 to 60 minutes.

Operation S4) is an operation of washing and then drying the activated carbon raw material obtained in operation S3). Washing may be performed using acid, base, water, etc. until pH of a carbon raw material aqueous dispersion reaches 5 to 9, specifically, pH 6 to 8. Drying may be performed at a temperature within a range of 70 to 120°C and atmospheric pressure conditions for 10 to 20 hours, and then at a temperature within a range of 80 to 150°C and vacuum conditions for 1 to 5 hours, but an embodiment thereof is not limited thereto. It is sufficient that drying in operation S4) is performed under conditions that can sufficiently remove moisture from a carbon body (intermediate product).

Secondary crystallization in operation S5) may be performed at a temperature within a range of 1000°C to 1500°C for 10 to 60 minutes, under vacuum or in an inert gas atmosphere (nitrogen, argon, neon, helium, etc.). In detail, operation S1) may be performed at a temperature within a range of 1000°C to 1200°C for 10 to 50 minutes, under vacuum or in an inert gas atmosphere.

A secondary pretreatment in operation S6) may be performed by heat treatment at a temperature within a range of 500°C to 1000°C for 60 to 500 minutes in an atmosphere containing at least one heterogeneous element selected from the group consisting of boron, carbon, nitrogen, oxygen, phosphorus, and sulfur supplied at 100 to 600 sccm. When introducing a secondary heterogeneous element, a heat treatment may be performed at a relatively low temperature for a longer period of time in an atmosphere where a large amount of heterogeneous elements are supplied.

As a practical example, the heterogeneous element may be at least one selected from the group consisting of boron, carbon, nitrogen, oxygen, phosphorus and sulfur.

A second activation treatment operation, operation S7), may be an operation which develops mesopores to macro pores by growing the pores introduced through the operations S2) to S3) and simultaneously creating new pores. A mixture of a carbon raw material into which a secondary activated site has been introduced and an additive through operation S6) may include 0.1 to 10 parts by weight of an inorganic or organic surfactant, 0.1 to 10 parts by weight of an alkali metal hydroxide, and 1 to 10 parts by weight of neutral water, based on 100 parts by weight of the carbon raw material into which a secondary activated site has been introduced. In detail, the mixture may include 0.5 to 5 parts by weight of an organic surfactant, 0.5 to 5 parts by weight of an alkali metal hydroxide, and 1 to 8 parts by weight of neutral water, based on 100 parts by weight of a carbon raw material into which a secondary activated site has been introduced. During the secondary activation, a heat treatment may be performed at a relatively high temperature for a longer period of time.

The alkali metal hydroxide may be one or more selected from the group consisting of LiOH, NaOH, KOH, RbOH,

and CsOH, but an embodiment thereof is not limited thereto. The organic surfactant may be at least one of SDBS, SDS, LDS, CTAB, DTAB, PVP, Triton X-series, Brij-series, Tween-series, poly(acrylic acid), and polyvinyl alcohol, but an embodiment thereof is not limited thereto.

A heat treatment during secondary activation in operation S7) may be performed in an inert gas atmosphere at a temperature within a range of 500°C to 1000°C for 10 to 300 minutes. Specifically, the heat treatment may be performed at a temperature within a range of 650°C to 850°C for 30 to 250 minutes.

It is sufficient that washing and drying in operation S8) are performed substantially the same as those in operation S4).

(Example 1)

A carbon raw material (Li-435, Denka Company Limited) was heated at 1000°C under an argon atmosphere for 30 minutes to perform a crystallization treatment. Thereafter, a mixed gas of oxygen and nitrogen gas (50 vol% of oxygen and 50 vol% of nitrogen in the gas) was supplied to the crystallized carbon raw material at a flow rate of 300 sccm, and a process of introducing an activated site was performed by heat treatment at a temperature of 600°C for 1 hour. Thereafter, 1 part by weight of an organic surfactant (Triton X-100), 1 part by weight of potassium hydroxide, and 3 parts by weight of neutral water were added to the carbon raw material into which the activated site has been introduced, and the mixture was stirred for 60 minutes and then dried with hot air to prepare a mixture. The prepared mixture was then heat treated (activated) at 700°C for 30 minutes in a nitrogen atmosphere. Hydrochloric acid, ammonia water, and neutral water were sequentially added to the activated sample, stirred for more than 30 minutes, and then washed by vacuum filtration. During washing, hydrochloric acid and ammonia water processes were performed once each, and hydrochloric acid was added in an amount 1 time greater than a weight of potassium hydroxide used previously, and ammonia water was added in an amount 1 time greater than a weight of hydrochloric acid used previously. The washing process using neutral water was repeated until pH of a solution reached the range of 6 to 8 during stirring. Finally, when the pH reached the target, drying was performed for 12 hours or more at 120°C and atmospheric pressure conditions, and then additional drying was performed for 1 hour or more at 120°C and vacuum conditions.

After additional drying, the recovered carbon body was heated at 1000°C for 30 minutes under an argon atmosphere and was subjected to secondary crystallization. Thereafter, a mixed gas of oxygen and nitrogen (50 vol% oxygen and 50 vol% nitrogen in the gas) was supplied at a flow rate of 300 sccm to the carbon raw material subjected to a secondary crystallization treatment, and a heat treatment was performed at a temperature of 600°C for 1 hour to introduce a secondary activated site. Thereafter, 1 part by weight of an organic surfactant (Triton X-100), 1 part by weight of potassium hydroxide, and 3 parts by weight of neutral water were added to the carbon raw material into which the secondary activated site has been introduced, and stirred for 60 minutes, followed by hot air drying to prepare a secondary mixture. The secondary mixture thus prepared was heat-treated at 700°C for 60 minutes in a nitrogen atmosphere (secondary activation treatment). The second activated sample was washed using hydrochloric acid, ammonia water, and neutral water in the same manner as above, and then dried to prepare a porous carbon body.

(Examples 2 to 4)

A porous carbon body was prepared in the same manner as in Example 1, except that conditions for introducing a secondary activated site and secondary activation treatment conditions were performed under the conditions in Table 1 below.

(Table 1)

| | INTRODUCE SECONDARY ACTIVATED SITE | | SECONDARY ACTIVATION | |
|---|---|---|---|---|
| | TEMPERATURE (°C) | TIME (hr) | TEMPERATURE (°C) | TIME (min) |
| EXAMPLE2 | 600 | 1 | 700 | 150 |
| EXAMPLE3 | 600 | 5 | 700 | 150 |
| EXAMPLE4 | 600 | 0.5 | 700 | 150 |

The prepared porous carbon body was analyzed under the following conditions.

Nitrogen adsorption/desorption measurement

A nitrogen adsorption-desorption isotherm may be obtained by measuring a change in nitrogen adsorption amount on a porous carbon body according to a change in nitrogen gas pressure at a temperature of 77 K.

Experimentally, nitrogen adsorption/desorption isotherms were measured based on ASTM D6556.

In detail, in addition to ASTM D6556, sample preparation to obtain nitrogen adsorption/desorption isotherms was as follows:

1) Weigh 300 mg of a porous carbon sample,
2) Dry the sample at 200°C and under vacuum of 0.1 Torr or less for 12 hours,
3) Measure a nitrogen adsorption/desorption isotherm using a surface area measuring device (e.g., Micromeritics, ASAP 2460).

In addition to ASTM D6556, measuring conditions for obtaining nitrogen adsorption/desorption isotherms were as follows:

Nitrogen adsorption gas, a temperature of 77K using liquid nitrogen, accuracy for measuring relative pressure ($P/P_0$) of 0.02, and range of relative pressure ($P/P_0$) of 0 to 1.

BJH method based on Harkins-Jurassic equation

Using the BJH method, a nitrogen relative pressure ($P/P_0$) of the adsorption/desorption isotherm was converted into a pore size (mm), a nitrogen adsorption amount ($cm^3/g$ STP) was converted into a pore volume ($cm^3/g$) to obtain pore size distribution. In this case, when converting the relative pressure into a pore size, correction was performed using a Harkins-Jura thickness curve. In addition, Faas correction, a standard BJH correction, was performed along with the Harkins-Jura thickness curve. For adsorption isotherms, the transition from the pore size to the pore volume occurred in the pore size range of 1.7 to 300 nm, and for desorption isotherms, in the pore size range of 2.0 to 50 nm.

X-ray Diffraction Measurement

An X-ray diffraction pattern of the porous carbon body was obtained by applying ASTM D5357 standard and using a conventional X-ray diffraction measuring device (e.g., RIGAKU, SmartLab SE) under the following measurement conditions:

0.5 g of porous carbon powder, Cu K$\alpha$ line, scan range of 10 to 70°, scan speed of 5.0°/min, scan step size of 0.03°.

d002, La, Lc using X-ray diffraction pattern of porous carbon body

$d_{002}$ is an average interlayer spacing (nm) of the porous carbon body based on a (002) plane, and is calculated by Bragg's law ($d_{002} = \lambda/2\sin\theta_{002}$, $\lambda$ = X-ray wavelength (nm)).

A crystalline height ($L_c$, nm) and a crystalline length ($L_a$, nm), which determine a crystalline size in a porous carbon body, were calculated by the following Scherrer equation.

```
crystalline size(nm)=(k·λ)/(β₀·cosθ)
```

$L_a$ is a k (shape factor) of 1.84, $\beta_0$ is a full width at half maximum (radian) of a (100) peak in an X-ray diffraction pattern of a porous carbon body, $\lambda$ is an X-ray wavelength (nm), $\theta$ is a diffraction angle of (100) (Bragg angle, radian).

$L_c$ is a k (shape factor) of 0.9, $\beta_0$ is a full width at half maximum (radian) of a (002) peak in an X-ray diffraction pattern of a porous carbon body, $\lambda$ is an X-ray wavelength (nm), $\theta$ is a diffraction angle of (002) (Bragg angle, radian).

Using the prepared porous carbon body, a catalyst, a CCM, and a single cell were prepared under the following conditions, and the electrochemical properties thereof were analyzed.

Preparation of catalyst

0.75 g of a porous carbon body was dispersed in 388.2 g of a mixture of ethylene glycol (EG) and water (water:EG weight ratio = 1:1) to prepare a dispersion, and then 4.95 g of a 20 wt% platinum precursor aqueous solution was added to the prepared dispersion to prepare a mixed solution. The prepared mixed solution was heated at 105°C for 1 hour to support platinum particles on the porous carbon body. Thereafter, the mixed solution was cooled to room temperature, and the porous body having the platinum particles supported thereon was filtered, and then washed sufficiently with distilled water, and dried at a temperature of 250°C in a vacuum dryer to produce a catalyst.

Preparation of catalyst coated membrane (CCM)

Membrane electrode assemblies (MEAs) were manufactured using a catalyst-coated membrane (CCM) with an active area of 25 cm$^2$. In all tests, commercial Pt/C (manufactured by TANAKA, product number 1021-E941, Pt catalyst loading 19.9%) was used as an oxidation electrode (anode) catalyst, and the catalyst prepared in the examples was used as an active reduction electrode (cathode) catalyst. All catalyst slurries were prepared by mixing the catalyst with distilled water, Nafion (20 wt% in DI water + 1-propanol ratio 0.739), and 1-propanol. The prepared catalyst slurry was coated on a fluorinated polyimide (FPI) film using a bar coater at a constant speed of 15 mm/sec. The film was dried at 60°C for 12 hours to prepare a reduction electrode. The reduction electrode thus prepared was pressed together with a commercial oxidation electrode and a Nafion membrane using a vacuum press at 145°C for 15 minutes to finally prepare a CCM.

Performance Test

PEMFC performance was tested at 80°C. For a high-humidity test, completely humidified (100% relative humidity) high-purity hydrogen was supplied to an oxidation electrode, and completely humidified (100% relative humidity) air was supplied to a reduction electrode. In addition, for a low-humidity test, low-humidified (relative humidity of 40%) high-purity hydrogen was supplied to the oxidation electrode, and low-humidified (relative humidity of 40%) air was supplied to the reduction electrode. In both the high-humidity test and the low-humidity test, a minimum flow rate of high-purity hydrogen was 100 sccm and a minimum flow rate of air was 200 sccm. During the performance test, a Stoichiometry Ratio (SR) was set to $H_2$/Air=1.5/1.8 and a back pressure was maintained 1.5 bar.

Electrochemical impedance spectroscopy (EIS) was measured in the range of 0.1 to 100 kHz under conditions of 500 sccm of low-humidified (relative humidity of 40%) high-purity hydrogen and 500 sccm of low-humidified (relative humidity of 40%) high-purity nitrogen at a 0.1 $V_{RHE}$ voltage. The back pressure was maintained at 1.5 bar during the test.

In order to compare with the porous carbon body prepared in the examples, the crystallinity and pore characteristics of a commercial carbon body were analyzed in the same manner as in the analysis of the porous carbon body. In addition, a catalyst, a CCM, and a single cell were manufactured using the commercial carbon body in the same manner as the porous carbon body, and the electrochemical characteristics thereof were evaluated. The commercial carbon body used for the comparison were Li-250 (Denka Company Limited), Li-400 (Denka Company Limited), Li-435(Denka Company Limited), MH-00(CNovel™, TOYO TANSO), MH-18(CNovel™, TOYO TANSO), and MH-18_2$\mu$m (CNovel™, TOYO TANSO).

Hereinafter, when referring to the results measured using each commercial carbon body or porous carbon body prepared in the examples, only a specific product name or an example number of the commercial carbon body was used. For example, the electrochemical characteristics of a single cell manufactured using MH-18 (CNovel™, TOYO TANSO) as a Pt support may be referred to as the electrochemical characteristics of MH-18. For example, a delta graph derived from the nitrogen adsorption/desorption isotherm of MH-18 (CNovel™, TOYO TANSO) may be referred to as a delta graph of MH-18. For example, electrochemical characteristics of a porous carbon body prepared in Example 1, a catalyst manufactured using the porous carbon body as a Pt support, a CCM, and a single cell may be referred to as the electrochemical characteristics of Example 1 of the porous carbon body of Example 1, the catalyst of Example 1, the CCM of Example 1, and the single cell of Example 1.

A surface area of 2 to 5 nm (SSA1, m$^2$/g), a surface area of 2 to 100 nm (SSA2, m$^2$/g), d$_{002}$(nm), L$_a$(nm), and an average number of graphite layers (average number of layers, pieces) of the porous carbon bodies prepared in the examples and comparative samples were measured and summarized in Table 2.

(Table 2)

| | SSA1 | SSA2 | d$_{002}$ | L$_a$ | AVERAGE NUMBER OF LAYERS |
|---|---|---|---|---|---|
| EXAMPL1 | 264.82 | 395.68 | 0.350 | 8.31 | 9.45 |
| EXAMPL2 | 222.76 | 423.03 | 0.350 | 9.05 | 9.57 |
| EXAMPL3 | 295.03 | 520.90 | 0.350 | 9.04 | 9.42 |
| EXAMPL4 | 178.89 | 266.43 | 0.350 | 7.97 | 9.27 |
| Li-250 | 23.22 | 45.86 | 0.350 | 8.15 | 8.65 |
| Li-400 | 18.13 | 35.30 | 0.353 | 7.52 | 7.94 |
| Li-435 | 60.91 | 121.08 | 0.351 | 8.24 | 8.78 |
| MH-00 | 1317.11 | 1622.43 | 0.362 | 3.96 | 3.07 |
| MH-18 | 1027.47 | 1255.75 | 0.345 | 7.49 | 17.00 |

(continued)

| | SSA1 | SSA2 | $d_{002}$ | $L_a$ | AVERAGE NUMBER OF LAYERS |
|---|---|---|---|---|---|
| MH-18_2 μ m | 1066.94 | 1305.47 | 0.342 | 7.58 | 11.49 |

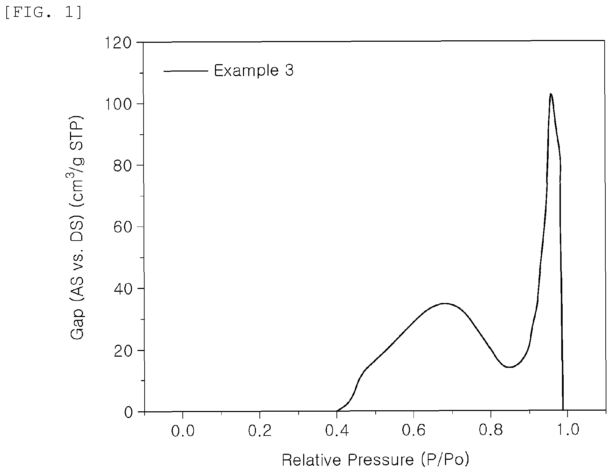

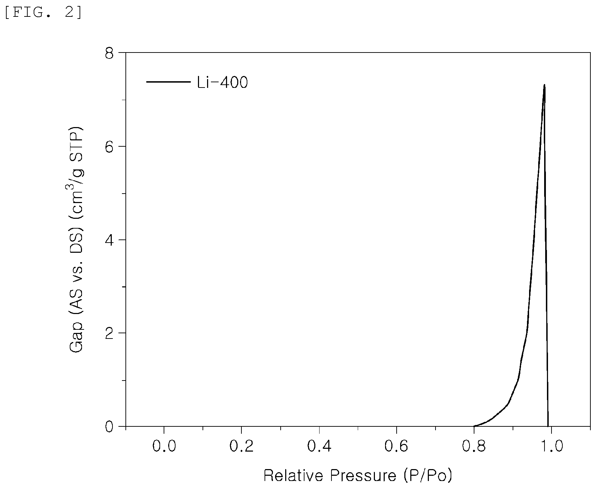

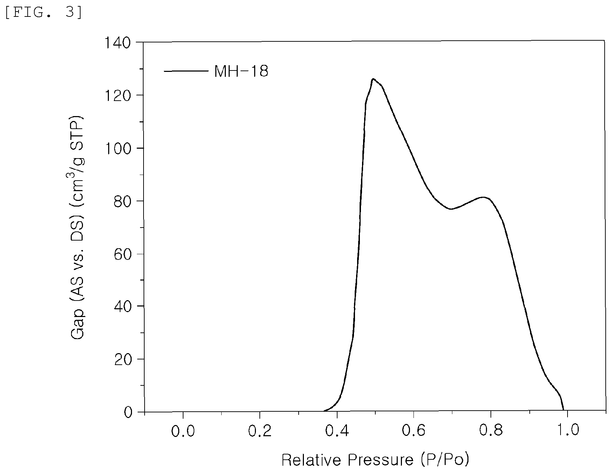

FIG. 1 is a diagram illustrating a delta graph of a porous carbon body of Example 1. Delta graphs of comparative samples were also shown in FIG. 2 (delta graph of Li-400 sample) and FIG. 3 (delta graph of MH-18 sample).

A porous carbon body prepared in the example exhibited a nitrogen adsorption/desorption curve with hysteresis, and had a hysteresis that closed around relative pressure of 0.4, as shown in FIG. 1.

The porous carbon body prepared in the example had two maximum points on the delta graph as shown in FIG. 1, and a size of a maximum point located at a relatively high relative pressure (second maximum point) was larger than a maximum point located at a relatively low relative pressure (first maximum point).

On delta graphs of the porous carbon body prepared in the example and the comparative sample, the number of a maximum point, a value of a first maximum point ($cm^3$/g STD), a value of a second maximum point ($cm^3$/g STD), and a ratio of the values of the maximum points (value of the first maximum point/value of the second maximum point) are summarized in Table 3.

(Table 3)

| | NUMBER OF MAXIMUM POINTS | VALUE OF FIRST MAXIMUM POINT | VALUE OF SECOND MAXIMUM POINT | RATIO OF MAXIMUM POINT |
|---|---|---|---|---|
| EXAMPL1 | 2 | 21.55 | 27.83 | 0.77 |
| EXAMPL2 | 2 | 35.47 | 49.53 | 0.72 |
| EXAMPL3 | 2 | 34.76 | 102.36 | 0.34 |
| EXAMPL4 | 2 | 6.02 | 38.57 | 0.16 |
| Li-250 | 1 | 9.52 | - | - |
| Li-400 | 1 | 7.32 | - | - |
| Li-435 | 1 | 25.50 | - | - |
| MH-00 | 2 | 129.08 | 88.41 | 1.46 |
| MH-18 | 2 | 129.04 | 83.82 | 1.54 |
| MH-18 2 μm | 2 | 110.69 | 18.05 | 6. 13 |

On delta graphs of the porous carbon body manufactured in the examples and the comparative sample, a position of a first maximum point (P/P$_0$), a position of a second maximum point (P/P$_0$), and a size of a minimum point between the first maximum point and the second maximum point, expressed as a relative % to the first maximum point based on the value of the first maximum point, are summarized in Table 4.

(Table 4)

| | POSITION OF FIRST MAXIMUM POINT | POSITION OF SECOND MAXIMUM POINT | SIZE OF MINIMUM POINT (%) |
|---|---|---|---|
| EXAMPL1 | 0. 66 | 0.96 | 34.41 |
| EXAMPL2 | 0.74 | 0.96 | 45.68 |
| EXAMPL3 | 0.68 | 0.96 | 40.05 |
| EXAMPL4 | 0.46 | 0.96 | 34.74 |

In the nitrogen adsorption/desorption isotherms of the porous carbon body prepared in the examples and comparative samples, an area of hysteresis (HA1) located in the range of relative pressure of 0.4 to 0.9 and an area of hysteresis (HA2) located in the range of relative pressure of 0.9 to 1.0 were obtained, and an area ratio (HA2/HA1) was calculated and summarized in Table 5.

(Table 5)

|  | HA1 | HA2 | HA2/HA1 |
|---|---|---|---|
| EXAMPL1 | 7. 33 | 1. 13 | 0. 15 |
| EXAMPL2 | 10.71 | 2.99 | 0. 28 |
| EXAMPL3 | 10.81 | 6.41 | 0. 59 |
| EXAMPL4 | 1. 91 | 2.45 | 1. 28 |
| Li-250 | 0. 14 | 0.49 | 3.42 |
| Li-400 | 0.05 | 0. 35 | 6. 52 |
| Li-435 | 0.67 | 1. 58 | 2. 37 |
| MH-00 | 40. 15 | 1.67 | 0.04 |
| MH-18 | 40. 66 | 1. 60 | 0.04 |
| MH-18_2 $\mu$m | 32.85 | 1.63 | 0.05 |

Electrochemical characteristics of a single cell manufactured using the porous carbon body prepared in the example and the carbon body of the comparative samples are summarized in Table 6 (low humidity condition of 40% of relative humidity) and Table 7 (high humidity condition of 100% of relative humidity). In Tables 6 and 7, J@0.6V refers to a current density measured at a fixed voltage of 0.6 V, and V@0.8 A/cm$^2$ and V@1.5 A/cm$^2$ refer to voltages measured at fixed current densities of 0.8 A/cm$^2$ and 1.5 A/cm$^2$. In Tables 6 and 7, 'V ratio' is a ratio (unit: %) of a voltage measured under low current density conditions of 0.8 A/cm$^2$ divided by a voltage measured under high current density conditions of 1.5 A/cm$^2$.

(Table 6)

|  | LOW-HUMIDITY CONDITIONS OF 40% OF RELATIVE HUMIDITY | | |
|---|---|---|---|
|  | J @ 0. 6V (A/cm$^2$) | V @ 0.8 A/cm$^2$ (V) | V @ 1. 5 A/cm$^2$ (V) |
| EXAMPL1 | 1. 19 | 0.674 | 0. 559 |
| EXAMPL2 | 1.24 | 0. 683 | 0. 539 |
| EXAMPL3 | 1. 27 | 0.693 | 0. 542 |
| EXAMPL4 | 1. 18 | 0.659 | 0. 507 |
| Li-250 | 0. 71 | 0. 584 | 0.435 |
| Li-400 | 0. 73 | 0. 596 | 0.484 |
| Li-435 | 0.85 | 0.602 | 0.493 |
| MH-00 | 0.91 | 0.619 | 0.492 |
| MH-18 | 0.96 | 0.632 | 0. 502 |
| MH-18_2 $\mu$m | 0.97 | 0.639 | 0. 505 |

(Table 7)

|  | HIGH-HUMIDITY CONDITIONS OF 100% OF RELATIVE HUMIDITY | | |
|---|---|---|---|
|  | J @ 0. 6V (A/cm$^2$ ) | V @ 0.8 A/cm$^2$ (V) | V @ 1. 5 A/cm$^2$ (V) |
| EXAMPL1 | 1. 22 | 0.669 | 0. 547 |
| EXAMPL2 | 1.21 | 0.672 | 0. 533 |
| EXAMPL3 | 1.24 | 0.679 | 0. 532 |
| EXAMPL4 | 1. 13 | 0.661 | 0. 509 |
| Li-250 | 0. 72 | 0. 587 | 0.440 |
| Li-400 | 0. 75 | 0. 590 | 0.487 |

(continued)

| | HIGH-HUMIDITY CONDITIONS OF 100% OF RELATIVE HUMIDITY | | |
| --- | --- | --- | --- |
| | J @ 0. 6V (A/cm$^2$ ) | V @ 0.8 A/cm$^2$ (V) | V @ 1. 5 A/cm$^2$ (V) |
| Li-435 | 0.85 | 0.601 | 0.488 |
| MH-00 | 0.90 | 0.615 | 0.489 |
| MH-18 | 0.97 | 0.638 | 0.490 |
| MH-18_2 $\mu$ m | 0.96 | 0.640 | 0. 501 |

As a result of electrochemical impedance spectroscopy under low-humidity conditions, the resistance of reduction electrodes manufactured using the carbon bodies of Examples 1 to 4 was all 0.10 $\Omega$/cm$^2$. A Li-250 reduction electrode and a Li-400 reduction electrode were 0.15 $\Omega$/cm$^2$, a Li-435 reduction electrode was 0.13 $\Omega$/cm$^2$, a MH-00 reduction electrode and a MH-18 reduction electrode were both 0.12 $\Omega$/cm$^2$, and a MH-18_2$\mu$m reduction electrode was 0.11 $\Omega$/cm$^2$.

The embodiment is an example and the present disclosure is not limited thereto. Anything that has substantially the same configuration as the technical idea described in the patent claims of the present disclosure and achieves the same operational effect is included in the technical scope of the present disclosure.

Claims

1. Provided is a porous carbon body,
   the porous carbon body satisfying the following properties:

   Property 1: a surface area of pores having a size of 2 nm or more to 5 nm or less obtained by an N$_2$ desorption isotherm based on a Barrett-Joyner-Halenda (BJH) method based on a Harkins-Jura equation is 100 m$^2$/g to 500 m$^2$/g,
   Property 2: a surface area of pores having a size of 2 nm or more to 100 nm or less obtained by an N$_2$ desorption isotherm based on a Barrett-Joyner-Halenda (BJH) method based on a Harkins-Jura equation is 200 m$^2$/g to 1500 m$^2$/g,
   Property 3: an N$_2$ adsorption-desorption isotherm has hysteresis, and a delta graph, a graph of a value obtained by subtracting a value of the nitrogen adsorption isotherm from a value of the nitrogen desorption isotherm according to relative pressure in a range of relative pressure of 0.3 to 1.0, has at least a first maximum point and a second maximum point, and a value of the first maximum point located at a lower relative pressure < a value of the second maximum point located at a higher relative pressure.

2. The porous carbon body of claim 1, wherein a maximum point ratio, which is a value of the first maximum point divided by a value of the second maximum point, is 0.10 to 0.95.

3. The porous carbon body of claim 1, wherein the first maximum point is located in a range of relative pressure (P/P$_0$) of 0.4 or more to less than 0.9, and the second maximum point is located in a range of relative pressure (P/P$_0$) of 0.9 or more to less than 1.0.

4. The porous carbon body of claim 3, wherein the first maximum point is located in a range of relative pressure (P/P$_0$) of 0.45 to 0.80, and the second maximum point is located in a range of relative pressure (P/P$_0$) of 0.93 to 0.98.

5. The porous carbon body of claim 1, wherein in the adsorption/desorption isotherm, an area ratio of an area of hysteresis in a region of relative pressure (P/P$_0$) of 0.9 to 1.0 divided by an area of hysteresis in a region of relative pressure (P/P$_0$) of 0.4 to 0.9 is 0.1 to 2.0.

6. The porous carbon body of claim 5, wherein the area ratio is 0.1 to 1.5.

7. The porous carbon body of any one of claims 1 to 6, wherein the porous carbon body further satisfies the following property 4:
   Property 4: an average interlayer spacing (d$_{002}$) measured by X-ray diffraction is 0.335 nm to 0.350 nm.

8. The porous carbon body of any one of claims 1 to 6, wherein the porous carbon body further satisfies the following property 5:
Property 5: an a-axis lattice constant ($L_a$) measured by X-ray diffraction is 4 nm to 12 nm.

9. The porous carbon body of any one of claims 1 to 6, wherein relative pressure (P/P0) at a point at which the hysteresis closes is 0.45 or less.

10. The porous carbon body of any one of claims 1 to 6, wherein in the delta graph, wherein a value of a minimum point located between the first maximum point and the second maximum point is 15 to 90% of the value of the first maximum point.

11. The porous carbon body of any one of claims 1 to 6, wherein the porous carbon body is doped with a heterogeneous element.

12. A catalyst for a fuel cell comprising a catalyst material supported on the porous carbon body of any one of claims 1 to 6.

13. A catalyst layer for a fuel cell containing the catalyst of claim 12 and ionomer.

14. A polymer electrolyte membrane fuel cell comprising the catalyst of claim 12.

[FIG. 1]

[FIG. 2]

[FIG. 3]

## INTERNATIONAL SEARCH REPORT

| International application No. |
| --- |
| **PCT/KR2023/022035** |

### A. CLASSIFICATION OF SUBJECT MATTER

**H01M 4/92**(2006.01)i; **H01M 4/90**(2006.01)i; **C01B 32/15**(2017.01)i

According to International Patent Classification (IPC) or to both national classification and IPC

### B. FIELDS SEARCHED

Minimum documentation searched (classification system followed by classification symbols)

H01M 4/92(2006.01); B01J 20/20(2006.01); B01J 21/18(2006.01); B01J 27/24(2006.01); B01J 35/10(2006.01); B01J 37/00(2006.01); H01M 4/86(2006.01); H01M 4/96(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 전해질 막 연료전지(polymer electrolyte membrane fuel cell), 촉매(catalyst), 다공성 탄소체(porous carbon), Barrett-Joyner-Halenda, 질소 탈착 등온선(N2 desorption isotherm), 기공(pore), 표면적(surface area)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2413206 B1 (THE INDUSTRY & ACADEMIC COOPERATION IN CHUNGNAM NATIONAL UNIVERSITY (IAC)) 24 June 2022 (2022-06-24)<br>See claims 12-13; paragraphs [0099], [0113] and [0130]-[0133]; and examples 1-2. | 1-14 |
| A | WO 2022-085693 A1 (NIPPON STEEL CHEMICAL & MATERIAL CO., LTD.) 28 April 2022 (2022-04-28)<br>See entire document. | 1-14 |
| A | KR 10-2112909 B1 (SEOUL NATIONAL UNIVERSITY R&DB FOUNDATION et al.) 20 May 2020 (2020-05-20)<br>See entire document. | 1-14 |
| A | KR 10-2017-0023305 A (FOUNDATION OF SOONGSIL UNIVERSITY-INDUSTRY COOPERATION) 03 March 2017 (2017-03-03)<br>See entire document. | 1-14 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 April 2024** | **09 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

### C. DOCUMENTS CONSIDERED TO BE RELEVANT

| Category* | Citation of document, with indication, where appropriate, of the relevant passages | Relevant to claim No. |
|---|---|---|
| A | CN 114902453 A (AGC INC.) 12 August 2022 (2022-08-12)<br>See entire document. | 1-14 |
| A | RAMASWAMY, N. et al. Carbon Support Microstructure Impact on High Current Density Transport Resistances in PEMFC Cathode. Journal of The Electrochemical Society. 2020, vol. 167, article no. 064515, pp. 1-12.<br>See entire document. | 1-14 |

Form PCT/ISA/210 (second sheet) (July 2022)

**INTERNATIONAL SEARCH REPORT**
**Information on patent family members**

International application No.

**PCT/KR2023/022035**

| Patent document cited in search report | | | Publication date (day/month/year) | Patent family member(s) | | | Publication date (day/month/year) |
|---|---|---|---|---|---|---|---|
| KR | 10-2413206 | B1 | 24 June 2022 | KR | 10-2022-0022982 | A | 02 March 2022 |
| WO | 2022-085693 | A1 | 28 April 2022 | CN | 116391277 | A | 04 July 2023 |
| | | | | EP | 4231393 | A1 | 23 August 2023 |
| | | | | JP | 2022-066847 | A | 02 May 2022 |
| | | | | KR | 10-2023-0084187 | A | 12 June 2023 |
| | | | | US | 2023-0395817 | A1 | 07 December 2023 |
| KR | 10-2112909 | B1 | 20 May 2020 | KR | 10-2019-0057760 | A | 29 May 2019 |
| KR | 10-2017-0023305 | A | 03 March 2017 | KR | 10-1799640 | B1 | 21 November 2017 |
| CN | 114902453 | A | 12 August 2022 | EP | 4082662 | A1 | 02 November 2022 |
| | | | | JP | 2021-132103 | A1 | 01 July 2021 |
| | | | | US | 2022-0328847 | A1 | 13 October 2022 |
| | | | | WO | 2021-132103 | A1 | 01 July 2021 |